Europäisches Patentamt

European Patent Office

Office européen des brevets

(19)

(11) EP 1 357 370 A1

(12) EUROPÄISCHE PATENTANMELDUNG

(43) Veröffentlichungstag:
29.10.2003 Patentblatt 2003/44

(51) Int Cl.⁷: **G01L 1/14**

(21) Anmeldenummer: 02009126.0

(22) Anmeldetag: 24.04.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Esec Trading S.A.**
**6330 Cham (CH)**

(72) Erfinder:
• **Mannhart, Eugen, Dr.**
**6330 Cham (CH)**
• **Leu, Felix**
**6300 Zug (CH)**

(74) Vertreter: **Falk, Urs, Dr.**
**Patentanwaltsbüro Dr. Urs Falk,**
**Eichholzweg 9A**
**6312 Steinhausen (CH)**

(54) **Induktiver Kraftsensor**

(57)    Ein erfindungsgemässer Kraftsensor umfasst eine Membrane aus Metall, eine Leiterplatte mit einer aus einer Leiterbahn gebildeten Flachspule für die Messung des Abstandes zwischen der Membrane und der Flachspule, wobei sich die Flachspule auf einer der Membrane zugewandten Seite der Leiterplatte befindet, und ein Gehäuse mit einer Öffnung, durch die hindurch die Membrane mit einer Kraft beaufschlagt werden kann, wobei das Gehäuse und die Leiterplatte Bohrungen aufweisen, damit an beiden Seiten der Membrane der in der Umgebung herrschende Druck anliegt. Ein solcher Kraftsensor zeichnet sich durch sehr geringe Schwankungen der Nulllinie und der Empfindlichkeit aus und temperaturbedingte Änderungen der Empfindlichkeit lassen sich auf einfache Weise kompensieren.

Fig. 1

EP 1 357 370 A1

**Beschreibung**

Die Erfindung betrifft einen Kraftsensor der im Oberbegriff des Anspruchs 1 genannten Art.

Ein solcher Kraftsensor eignet sich z.B. für die Eichung der sogenannten Bondkraft bei einem Die Bonder. Bei der Montage von Halbleiterchips mittels eines Die Bonders wird das Substrat von einer Transporteinrichtung taktweise einer Dispensstation, wo Klebstoff aufgetragen wird, und dann einer Bondstation zugeführt, wo der nächste Halbleiterchip platziert wird. Um eine gleichbleibend hohe Qualität der elektrischen Eigenschaften der montierten Halbleiterchips zu erreichen, ist es erforderlich, die Halbleiterchips unter kontrollierten Bedingungen auf dem Substrat abzusetzen. Wichtige Prozessparameter sind insbesondere die Kraft, die sogenannte Bondkraft, mit der der von einem Greiforgan aufgenommene Halbleiterchip gegen das Substrat gedrückt wird, und die Zeitdauer, wie lange dies geschieht, da diese beiden Parameter im Wesentlichen bestimmen, wie der zwischen dem Substrat und dem Halbleiterchip eingeklemmte Klebstoff verfliesst.

Die vom Greiforgan des Montageautomaten aufzubringende Bondkraft muss regelmässig überprüft werden. Die auf dem Markt erhältlichen Kraftsensoren eignen sich für die Eichung der Bondkraft nur schlecht, da sie selbst zu grosse Schwankungen der Nulllinie und der Empfindlichkeit aufweisen.

Der Erfindung liegt die Aufgabe zugrunde, einen Kraftsensor zu entwickeln, der sich für die Eichung der Bondkraft eignet.

Die genannte Aufgabe wird erfindungsgemäss gelöst durch die Merkmale des Anspruchs 1.

Ein erfindungsgemässer Kraftsensor umfasst eine Membrane aus Metall, eine Leiterplatte mit einer aus einer Leiterbahn gebildeten Flachspule für die Messung des Abstandes zwischen der Membrane und der Flachspule, wobei sich die Flachspule auf einer der Membrane zugewandten Seite der Leiterplatte befindet, und ein Gehäuse mit einer Öffnung, durch die hindurch die Membrane mit einer Kraft beaufschlagt werden kann, wobei das Gehäuse und die Leiterplatte Bohrungen aufweisen, damit an beiden Seiten der Membrane der in der Umgebung herrschende Druck anliegt. Ein solcher Kraftsensor zeichnet sich durch sehr geringe Schwankungen der Nulllinie und der Empfindlichkeit aus und temperaturbedingte Änderungen der Empfindlichkeit lassen sich auf einfache Weise kompensieren. Mit dem Sensor lassen sich problemlos Bondkräfte bis zu 15 N messen.

Nachfolgend wird ein Ausführungsbeispiel der Erfindung anhand der Zeichnung näher erläutert.

Es zeigen:

Fig. 1  einen Kraftsensor mit einer metallischen Membrane im Querschnitt, und

Fig. 2  die Membrane in der Aufsicht.

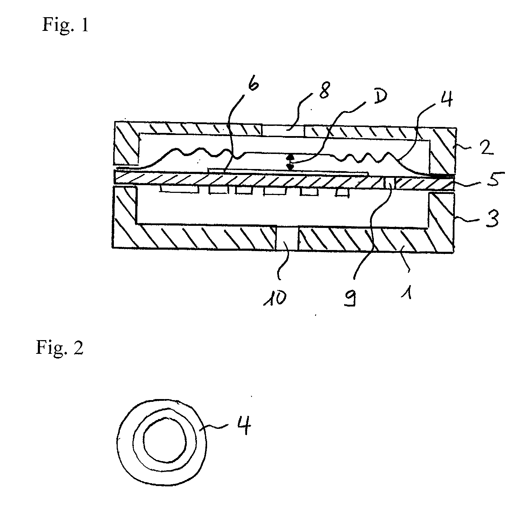

Die Fig. 1 zeigt einen Kraftsensor im Querschnitt. Der Kraftsensor umfasst ein topfartiges, aus einem Unterteil 1 und einem Oberteil 2 gebildetes Gehäuse 3, eine metallische Membrane 4 und eine Leiterplatte 5 mit einer auf der Leiterplatte 5 integrierten Flachspule 6: Die Flachspule 6 ist aus einer z.B. spiralförmig verlaufenden Leiterbahn gebildet. Die Leiterplatte 5 und die Membrane 4 sind zwischen dem Unterteil 1 und dem Oberteil 2 des Gehäuses 3 fest eingeklemmt. Die Flachspule 6 befindet sich auf der der Membrane 4 zugewandten Seite der Leiterplatte 5.

Die Membrane 4 weist bevorzugt eine gewellte Struktur auf, um zu erreichen, dass die Auslenkung der Membrane 4 möglichst linear proportional zur angelegten Kraft ist. Die Membrane 4 ist zudem bevorzugt kreisrund, wie in der Fig. 2 gezeigt ist. (Die wellenförmige Struktur der Membrane ist durch die konzentrischen Kreise dargestellt). Auch die Leiterplatte 5 und das Gehäuse 3 sind bevorzugt kreisrund. Die Membrane 4 besteht vorzugsweise aus einer Legierung aus CuBe. Geeignete Membranen sind beispielsweise von der Firma Beck erhältlich. Der Rand der Membrane 4 wird z.B. auf die Leiterplatte 5 aufgelötet und dann zwischen dem Unterteil 1 und dem Oberteil 2 des Gehäuses 3 eingeklemmt. Unterteil 1 und Oberteil 2 können beispielsweise verschraubt sein. Die Leiterplatte 5 ist mit elektronischen Bauteilen 7 bestückt, die eine elektronische Schaltung zum Betrieb der Flachspule 6 und zur Auswertung des von der Flachspule 6 gelieferten Signals bilden.

Das Oberteil 2 des Gehäuses 3 weist im Zentrum eine Öffnung 8 auf, damit die Membrane 4 mit der zu messenden Kraft beaufschlagt werden kann. Bei dem eingangs genannten Anwendungsbeispiel wird das Greiforgan des Montageautomaten durch die Öffnung 8 hindurch auf die Membrane 4 abgesenkt, wobei die Membrane 4 entsprechend der vom Greiforgan aufgebrachten Kraft gegen die Flachspule 6 hin ausgelenkt wird. Die Änderung des Abstandes D zwischen der Membrane 4 und der Flachspule 6 wird mittels der Flachspule 6 gemessen. Das von der elektronischen Schaltung gelieferte Ausgangssignal des Kraftsensors ist proportional zur Auslenkung der Membrane 4. Die Leiterplatte 5 und das Unterteil 1 des Gehäuses 3 weisen je eine Bohrung 9 bzw. 10 auf, so dass beide Seiten der Membrane 4 dem in der Umgebung herrschenden Druck ausgesetzt sind.

Die Flachspule 6 wird mit einem hochfrequenten Wechselstrom beaufschlagt und erzeugt somit ein hochfrequentes Magnetfeld. Die Frequenz f des Wechselstroms ist so hoch gewählt, dass die Eindringtiefe des Magnetfeldes in die Membrane 4 deutlich geringer ist als deren Dicke. Die Eindringtiefe $\delta$ ist bestimmt durch den Skineffekt und lässt sich gemäss der Gleichung

$$\delta \approx \sqrt{\frac{1}{\pi\mu\sigma f}} \qquad (1)$$

berechnen, wobei μ die magnetische Permeabilität und σ die elektrische Leitfähigkeit der metallischen Membrane 4 bezeichnen. Eine hohe Frequenz f drängt sich auch aus elektrotechnischen Gründen auf: Da die Induktivität L der Flachspule in der Regel sehr gering ist und die Flachspule mit einem Kondensator einen Schwingkreis bildet, ergibt sich nur dann ein vernünftiger Wert für die Kapazität C des Kondensators, wenn die Resonanzfrequenz des Schwingkreises sehr gross ist. Die Frequenz f beträgt typischerweise einige MHz. Das sich infolge der Änderung des Abstands zwischen der Membrane 4 und der Flachspule 6 verändernde Ausgangssignal der Flachspule 6 ist z.B. die Resonanzfrequenz des aus der Flachspule 6 und einem Kondensator gebildeten Schwingkreises, oder die Amplitude der an der Flachspule 6 anliegenden Wechselspannung, oder die Phasenlage der an der Flachspule 6 anliegenden Wechselspannung, oder ein anderes von der Flachspule 6 direkt abgeleitetes Signal. Die Flachspule 6 dient somit einerseits zur Erzeugung eines magnetischen Wechselfeldes als auch zur Erfassung der Wirkung, den die Membrane 4 auf das Magnetfeld ausübt. Eine für den Betrieb der Flachspule 6 geeignete Schaltung ist z.B. aus der europäischen Patentanmeldung EP 913 857 bekannt, auf die hiermit explizit verwiesen wird.

Das Gehäuse 3 dient vorwiegend als mechanischer Schutz der Membrane 4 und der Leiterplatte 5.

**Patentansprüche**

1. Kraftsensor, umfassend:

   - eine Membrane (4) aus Metall,
   - eine Leiterplatte (5) mit einer aus einer Leiterbahn gebildeten Flachspule (6) für die Messung eines Abstandes zwischen der Membrane (4) und der Flachspule (6), wobei sich die Flachspule (6) auf einer der Membrane (4) zugewandten Seite der Leiterplatte (5) befindet, und
   - ein Gehäuse (3) mit einer Öffnung (8), durch die hindurch die Membrane (4) mit einer Kraft beaufschlagt werden kann, wobei das Gehäuse (3) und die Leiterplatte (5) Bohrungen (9; 10) aufweisen, damit an beiden Seiten der Membrane (4) der in der Umgebung herrschende Druck anliegt.

2. Kraftsensor nach Anspruch 1, **dadurch gekennzeichnet, dass** die Membrane (4) kreisrund ist.

Fig. 1

Fig. 2

**Europäisches Patentamt**

# EUROPÄISCHER RECHERCHENBERICHT

Nummer der Anmeldung

EP 02 00 9126

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | DE 38 00 887 A (D. KOHN) 18. August 1988 (1988-08-18) * Spalte 4, Zeile 9 – Zeile 20; Abbildung 2 * | 1,2 | G01L1/14 |
| Y | FR 2 531 215 A (ILLINOIS TOOL WORKS) 3. Februar 1984 (1984-02-03) * Seite 14, Zeile 16 – Seite 16, Zeile 11; Abbildungen 1,9–12 * | 1,2 | |
| A | DE 195 10 447 A (LANDIS & GYR TECHNOLOGY INNOVATION AG) 14. August 1996 (1996-08-14) * Zusammenfassung; Abbildung * | 1,2 | |
| A | GB 2 063 485 A (ROBERT BOSCH GMBH) 3. Juni 1981 (1981-06-03) * Zusammenfassung; Abbildung 1 * | 1,2 | |
| A | WO 96 41141 A (SETRA SYSTEMS, INC.) 19. Dezember 1996 (1996-12-19) * Zusammenfassung; Abbildung 2 * | 1,2 | RECHERCHIERTE SACHGEBIETE (Int.Cl.7) G01L |
| A | EP 0 947 815 A (HAENNI &CIE. AG) 6. Oktober 1999 (1999-10-06) * Zusammenfassung; Abbildungen 1,2 * | 1,2 | |
| A | EP 0 774 651 A (LANDIS & GYR TECHNOLOGY INNOVATION AG) 21. Mai 1997 (1997-05-21) * Zusammenfassung; Abbildung 5 * | 1,2 | |

Der vorliegende Recherchenbericht wurde für alle Patentansprüche erstellt

| Recherchenort | Abschlußdatum der Recherche | Prüfer |
|---|---|---|
| DEN HAAG | 21. Oktober 2002 | Van Assche, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 00 9126

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-10-2002

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE | 3800887 | A | 18-08-1988 | DE | 8701752 | U1 | 03-09-1987 |
| | | | | DE | 3800887 | A1 | 18-08-1988 |
| FR | 2531215 | A | 03-02-1984 | US | 4493219 | A | 15-01-1985 |
| | | | | AU | 569474 | B2 | 04-02-1988 |
| | | | | AU | 1730283 | A | 09-02-1984 |
| | | | | BE | 897428 | A2 | 01-02-1984 |
| | | | | CA | 1212258 | A1 | 07-10-1986 |
| | | | | CH | 657952 | A5 | 30-09-1986 |
| | | | | DE | 3327331 | A1 | 09-02-1984 |
| | | | | DK | 352883 | A | 03-02-1984 |
| | | | | ES | 524628 | D0 | 16-06-1984 |
| | | | | ES | 8405942 | A1 | 01-10-1984 |
| | | | | FR | 2531215 | A1 | 03-02-1984 |
| | | | | GB | 2124777 | A ,B | 22-02-1984 |
| | | | | HK | 42787 | A | 05-06-1987 |
| | | | | IT | 1170187 | B | 03-06-1987 |
| | | | | JP | 59046828 | A | 16-03-1984 |
| | | | | NL | 8302710 | A | 01-03-1984 |
| | | | | SE | 8304127 | A | 30-03-1984 |
| | | | | SG | 22087 | G | 03-07-1987 |
| DE | 19510447 | A | 14-08-1996 | DE | 19510447 | A1 | 14-08-1996 |
| GB | 2063485 | A | 03-06-1981 | DE | 2946062 | A1 | 27-05-1981 |
| | | | | FR | 2469698 | A1 | 22-05-1981 |
| | | | | IT | 1134212 | B | 13-08-1986 |
| | | | | JP | 56084501 | A | 09-07-1981 |
| WO | 9641141 | A | 19-12-1996 | US | 5705751 | A | 06-01-1998 |
| | | | | AT | 199044 | T | 15-02-2001 |
| | | | | CN | 1192272 | A | 02-09-1998 |
| | | | | DE | 69611726 | D1 | 08-03-2001 |
| | | | | DE | 69611726 | T2 | 02-08-2001 |
| | | | | EP | 0830577 | A1 | 25-03-1998 |
| | | | | JP | 11506832 | T | 15-06-1999 |
| | | | | WO | 9641141 | A1 | 19-12-1996 |
| | | | | US | 5798462 | A | 25-08-1998 |
| EP | 947815 | A | 06-10-1999 | EP | 0947815 | A1 | 06-10-1999 |
| | | | | WO | 9950633 | A1 | 07-10-1999 |
| | | | | EP | 0985139 | A1 | 15-03-2000 |
| | | | | JP | 2002501621 | T | 15-01-2002 |
| EP | 774651 | A | 21-05-1997 | EP | 0774651 | A2 | 21-05-1997 |

EPO FORM P0461

Für nähere Einzelheiten zu diesem Anhang : siehe Amtsblatt des Europäischen Patentamts, Nr.12/82